# EUROPEAN PATENT APPLICATION

(11) **EP 4 800 753 A1**
(43) Date of publication of application: **02.09.2026**
(21) Application number: 24899253.9
(22) Date of filing: 12.07.2024
(51) Int. Cl.: H01M 4/133, H01M 4/139

(54) **SECONDARY BATTERY AND ELECTRIC DEVICE**

(30) Priority: 07.12.2023 CN 202311679355
(71) Applicant: Contemporary Amperex Technology Co., Limited, Ningde, Fujian 352100 (CN)
(72) Inventor: MA, Jianjun, Ningde, Fujian 352100 (CN); HE, Libing, Ningde, Fujian 352100 (CN)
(74) Representative: Lorenz Seidler Gossel Part. mbB
(86) International application number: PCT/CN2024/105210
(87) International publication number: WO 2025/118602

(57) **Abstract**

A secondary battery and an electric device. The secondary battery comprises a negative electrode sheet, the negative electrode sheet comprises a negative electrode current collector and a negative electrode film layer provided on at least one surface of the negative electrode current collector, the negative electrode film layer comprises a negative electrode active material and a conductive agent, the negative electrode active material comprises a graphite material, the tap density of the graphite material is greater than or equal to 1.2 g/cm³; and on the basis of the total mass of the negative electrode film layer, the mass fraction of the conductive agent is greater than or equal to 1.6%. The cycle stability of the secondary battery is further improved.

## Description

### CROSS REFERENCE

The present disclosure makes reference to Chinese Patent Application No. 202311679355.3 filed on December 07, 2023 and entitled "Secondary Battery and Electric Device", which is incorporated herein by reference in its entirety.

### TECHNICAL FIELD

The present disclosure belongs to the technical field of batteries, and in particular, relates to a secondary battery and an electric device.

### BACKGROUND

In recent years, secondary batteries have been widely applied in energy storage power systems such as hydraulic, thermal, wind, and solar power plants, as well as in various fields of power tools, electric bicycles, electric motorcycles, electric vehicles, military equipment, aerospace, and so on.

With the increasing endurance requirements of electric devices, there are more stringent requirements for the cycle life of secondary batteries. How to further improve the cycle life of secondary batteries is a technical problem that needs to be solved urgently by those skilled in the art.

### SUMMARY

An objective of the present disclosure is to provide a secondary battery and an electric device, which can further improve the cycle stability of the secondary battery.

A first aspect of the present disclosure provides a secondary battery, comprising a negative electrode sheet, wherein the negative electrode sheet comprises a negative electrode current collector and a negative electrode film layer disposed on at least one surface of the negative electrode current collector, the negative electrode film layer comprises a negative electrode active material and a conductive agent, the negative electrode active material comprises a graphite material, and the tap density of the graphite material is greater than or equal to 1.2 g/cm³; and based on the total mass of the negative electrode film layer, the mass percentage of the conductive agent is greater than or equal to 1.6%.

By comprising a relatively high content of conductive agent in the negative electrode film layer having high tap density, the electrical contact between the graphite materials can be effectively enhanced, the degree of black spots formed on a negative electrode can be reduced, the advantage that the graphite material with high tap density is long in cycle life can be fully exerted, and the cycle stability of the battery can be improved.

In any implementation of the present disclosure, based on the total mass of the negative electrode film layer, the mass percentage of the conductive agent ranges from 1.6% to 2.5%, optionally from 1.65% to 2.0%.

The conductive agent within the appropriate range can enhance the electrical contact between the graphite materials while enabling slurry to be effectively dispersed, which prevents excessive loss of lithium ions during a storage process due to excessive highly active conductive agents in the slurry, reduces the probability of side reactions during a cycle process, and further improves the cycle stability and storage performance, especially the high-temperature storage performance, of the secondary battery.

In any implementation of the present disclosure, the tap density of the graphite material ranges from 1.20 g/cm³ to 1.42 g/cm³, optionally from 1.25 g/cm³ to 1.35 g/cm³.

The tap density within the appropriate range can reduce the probability of black spots on the negative electrode sheet and improve the quality of the negative electrode sheet while improving the cycle stability of the secondary battery.

In any implementation of the present disclosure, the graphite material comprises primary particles. Optionally, based on the total number of particles of the graphite material, the number percentage of the primary particles in the graphite material is greater than or equal to 85%.

Compared with secondary particles, primary particles may effectively reduce the content of grain boundaries, reduce the probability of side reactions between the graphite material and an electrolyte solution, improve the uniformity of the electrode sheet, and further improve the cycle stability of the secondary battery.

In any implementation of the present disclosure, the Dv1 of the graphite material ranges from 1.0 µm to 4.0 µm, optionally from 1.5 µm to 3.0 µm.

Applicants found that the Dv1 particle size of the graphite material has a significant impact on the electrochemical performance of the secondary battery. The graphite material having the Dv1 within the appropriate range can not only enable the negative electrode film layer to have a specified proportion of fine powder, that is, small-particle graphite materials which is beneficial to improving the electrical contact of the negative electrode film layer, improving the dynamic performance, reducing the severity of black spots on the negative electrode when the battery is recycled, and reducing the probability of "rapid degradation" in the electrochemical performance of the battery, but also reduce the probability of the small-particle graphite materials blocking pores of the negative electrode film layer, thereby maintaining normal electrode sheet pores, so that the electrolyte solution has high wettability, the risk of lithium precipitation of the negative electrode is reduced, and the cycle stability of the battery is further improved.

In any implementation of the present disclosure, the volume distribution particle diameter Dv50 of the graphite material ranges from 10 µm to 18 µm, optionally from 12 µm to 16 µm.

The graphite material having the Dv50 within the above range is prone to form an effective connection in the negative electrode film layer, so as to improve the conductivity of active ions and electrons, and can form a reasonable pore structure in the negative electrode film layer, thereby comprehensively improving the cycle stability of the secondary battery.

In any implementation of the present disclosure, the particle size distribution (Dv90-Dv10)/Dv50 of the graphite material ranges from 1.20 to 1.70, optionally from 1.35 to 1.60.

The particle size distribution of the graphite material is within the above range, which is not only beneficial to reducing a bridging phenomenon between the graphite materials and improving the electrical contact of the negative electrode film layer, but also beneficial to improving the dispersion uniformity of the graphite material in the slurry and comprehensively improving the cycle performance of the battery.

In any implementation of the present disclosure, the specific surface area of the graphite material ranges from 0.6 m²/g to 1.5 m²/g, optionally from 0.8 m²/g to 1.4 m²/g.

The graphite material having the specific surface area within the above range can reduce the consumption of active ions during the formation of a solid electrolyte interphase (SEI) film, reduce the probability of side reactions, and improve the cycle stability of the battery.

In any implementation of the present disclosure, the oil absorption value of the graphite material is less than or equal to 45 ml/100 g, optionally from 25 ml/100 g to 44 ml/100 g.

The oil absorption value of the graphite material can reflect the dispersibility of the graphite material in the negative electrode slurry to a certain extent. A high oil absorption value of the graphite material means that the graphite material needs to be impregnated with more dispersant, such as sodium carboxymethyl cellulose, during the dispersion process, and the slurry is easier to sediment, resulting in unstable quality of an electrode sheet coating process and uneven thickness of the electrode sheet after cold pressing. The graphite material having the oil absorption value within the appropriate range has excellent dispersibility in the negative electrode slurry, and the negative electrode slurry exhibits good antisedimentation and uniformity, which is prone to preparing an electrode sheet with uniform quality, reduces the probability of uneven local current density during charging and discharging, reduces a lithium precipitation phenomenon caused by the polarization of the electrode sheet, improves the cycle stability of the battery, and prolongs the service life of the battery.

In any implementation of the present disclosure, the degree of graphitization of the graphite material ranges from 88% to 93%, optionally from 89% to 92%.

The graphite material having the degree of graphitization within the above range has a larger interlayer spacing, which is beneficial to rapid deintercalation of active ions, reducing the expansion rate of the graphite material during the cycle process, and further improving the long cycle life of the battery.

In any implementation of the present disclosure, the compaction density of the negative electrode film layer ranges from 1.40 g/cm³ to 1.55 g/cm³; and/or, the areal density of the negative electrode film layer ranges from 7 mg/cm² to 14 mg/cm².

In any implementation of the present disclosure, the graphite material is synthetic graphite.

In any implementation of the present disclosure, the conductive agent comprises at least one of conductive carbon black, acetylene black, graphite, graphene, carbon nanotubes, and carbon nanofibers.

A second aspect of the present disclosure provides an electric device, comprising the secondary battery in the first aspect of the present disclosure.

### BRIEF DESCRIPTION OF THE DRAWINGS

In order to more clearly illustrate the technical solutions in embodiments of the present disclosure, drawings required to be used in the embodiments of the present disclosure are briefly described below. Obviously, the drawings described below show only some implementations of the present disclosure, and those skilled in the art may further derive other drawings from the drawings without creative effort.
FIG. 1 is a schematic diagram of an implementation of a secondary battery according to the present disclosure.
FIG. 2 is a schematic exploded view of an implementation of a secondary battery according to the present disclosure.
FIG. 3 is a schematic diagram of an implementation of a battery module according to the present disclosure.
FIG. 4 is a schematic diagram of an implementation of a battery pack according to the present disclosure.
FIG. 5 is a schematic exploded view of the embodiment of the battery pack shown in FIG. 4.
FIG. 6 is a schematic diagram of an implementation of an electric device including a secondary battery according to the present disclosure as a power supply.

The figures are not necessarily drawn to the actual scale. Reference Number: 1, battery pack; 2, upper box body; 3, lower box body; 4, battery module; 5, secondary battery; 51, housing; 52, electrode assembly; 53, cover plate.

### DETAILED DESCRIPTION OF PREFERRED EMBODIMENTS

Hereinafter, implementations specifically disclosing a secondary battery and an electric device of the present disclosure are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer greater than or equal to 2, it is equivalent to disclosing that the parameter is an integer such as 2, 3, 4, 5, 6, 7, 8, 9, 10, 11, or 12.

Unless otherwise specified, all implementations and optional implementations of the present disclosure may be combined with each other to form new technical solutions, and it is conceivable that such technical solutions should be included in the disclosure of the present disclosure.

Unless otherwise specified, all technical solutions and optional technical solutions of the present disclosure may be combined with each other to form new technical solutions, and it is conceivable that such technical solutions should be included in the disclosure of the present disclosure.

Unless otherwise specified, all steps in the present disclosure may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

Unless otherwise specified, the terms "including" and "containing" mentioned in the present disclosure are meant to be open or closed. For example, the "including" and "containing" may mean that other components not listed may be further included or contained, or only the listed components may be included or contained.

Unless otherwise specified, in the present disclosure, the term "or" is inclusive. For example, the phrase "A or B" means "A, B, or both A and B". More specifically, the condition "A or B" is satisfied by either A being true (or present) and B being false (or absent), A being false (or absent) and B being true (or present), or both A and B being true (or present).

Unless otherwise specified, the terms used in the present disclosure have the meanings commonly understood by those skilled in the art.

Unless otherwise specified, the numerical values of each parameter mentioned in the present disclosure may be measured by various test methods commonly used in the art, for example, they may be measured according to test methods provided in the embodiments of the present disclosure.

Unless otherwise specified, in the present disclosure, the term "active ion" refers to an ion that can be intercalated and deintercalated back and forth between a positive electrode and a negative electrode of the secondary battery, including but not limited to lithium ions.

In the present disclosure, the terms "a plurality of" and "various" refer to two or more.

With the continuous development of the new energy industry, lithium battery energy storage systems have attracted more and more attention. A lithium battery energy storage system is a device that uses a lithium battery to store energy, which can store energy generated by renewable energy sources such as solar power and wind power, and can also be used as an auxiliary facility of a power grid. Compared with the power battery, the energy storage battery places greater emphasis on the cycle life of the battery. To pursue the long cycle life of the battery, researchers usually select a negative electrode material with high tap density, because the negative electrode material with high tap density is subjected to less stress during a cold pressing process of the electrode sheet, which is beneficial to maintaining the integrity of the particles and reducing the stress inside the particles, maintaining the long-period pore structure of the electrode sheet while reducing the probability of side reactions, ensuring a smooth lithium intercalation path, reducing polarization, providing the dynamics performance of the battery in the long cycle period, and improving the cycle life of the battery. However, in research and development processes, the applicants found that after long-term cycling, with the increasing of a charging level, the negative electrode interface is prone to serious black spots, thereby causing local uneven current and polarization, so that the battery loses electrochemical activity and capacity attenuation is accelerated, resulting in "rapid degradation" of the battery performance, and the advantage that the graphite material with high tap density is long in cycle life cannot be fully exerted.

Based on this, the present disclosure provides a secondary battery, including a negative electrode sheet. The negative electrode sheet includes a negative electrode current collector and a negative electrode film layer disposed on at least one surface of the negative electrode current collector. The negative electrode film layer includes a negative electrode active material and a conductive agent. The negative electrode active material includes a graphite material. The tap density of the graphite material is greater than or equal to 1.2 g/cm³. Based on the total mass of the negative electrode film layer, the mass percentage of the conductive agent is greater than or equal to 1.6%.

As used herein, the term "tap density" refers to the mass per unit volume of powder in a container after being tapped under specified conditions.

In the present disclosure, the tap density of the graphite material may be measured by a method known in the art. As an example, with reference to GB/T 5162-2006, a powder tap density tester may be used for measuring. The test instrument may be a Dandong Baite BT-301, and the test parameters are as follows: vibration frequency, 250±15 times/min; amplitude, 3±0.2 mm; vibration times, 5000 times; and measuring cylinder, 25 mL.

In some implementations, the tap density of the graphite material is 1.2 g/cm³, 1.25 g/cm³, 1.3 g/cm³, 1.35 g/cm³, 1.4 g/cm³, 1.45 g/cm³, 1.5 g/cm³, or within a numerical range between any two of the above items.

In some implementations, based on the total mass of the negative electrode film layer, the mass percentage of the conductive agent is 1.6%, 1.7%, 1.8%, 1.9%, 2%, 2.1%, 2.2%, 2.3%, 2.4%, 2.5%, 2.6%, 2.7%, 2.8%, 2.9%, 3.0%, or within a numerical range between any two of the above items.

During a formation stage of the secondary battery, the negative electrode active material and an electrolyte solution undergo an electrochemical reaction to form a solid electrolyte interphase (SEI), which is accompanied by the generation of gas. In this process, the electrical contact between some negative electrode active material particles and surrounding particles is poor, so that a complete SEI film cannot be formed in time, resulting in delayed SEI film generation and gas production. The delayed gas cannot be promptly discharged during the formation process and remains between the negative electrode sheet and a separator, hindering the charging process in which active ions are deintercalated from the positive electrode, pass through the separator, and are intercalated into the negative electrode, which may cause black spot defects on the negative electrode sheet.

The researchers found that the reason for severe black spots on the negative electrode is that the graphite material with high tap density is prone to form a tight stack, and the electrode sheet can achieve an expected compaction density under a relatively low cold pressing pressure. However, due to the relatively low cold pressing pressure, it is impossible to form a tight electrical contact between the negative electrode material and the conductive agent during a compaction process of the electrode sheet, so that the probability of black spots increases.

By including a relatively high content of conductive agent in the negative electrode film layer with high tap density, the electrical contact between the graphite materials can be effectively enhanced, the degree of black spots formed on the negative electrode can be reduced, the probability of black spots formed on the negative electrode can be reduced, the advantage that the high tap density graphite material is long in cycle life can be fully exerted, and the cycle stability of the battery can be improved.

In some implementations, based on the total mass of the negative electrode film layer, the mass percentage of the conductive agent ranges from 1.6% to 2.5%, optionally from 1.65% to 2.0%.

The conductive agent within the appropriate range can enhance the electrical contact between the graphite materials while enabling slurry to be effectively dispersed, which prevents excessive loss of lithium ions during a storage process due to excessive highly active conductive agents in the slurry, reduces the probability of side reactions during a cycle process, and further improves the cycle stability and storage performance, especially the high-temperature storage performance, of the secondary battery.

In some implementations, the tap density of the graphite material ranges from 1.20 g/cm³ to 1.42 g/cm³. In some implementations, the tap density of the graphite material ranges from 1.25 g/cm³ to 1.35 g/cm³.

The tap density within the appropriate range can reduce the probability of black spots on the negative electrode sheet and improve the quality of the negative electrode sheet while improving the cycle stability of the secondary battery.

In some implementations, the graphite material includes primary particles. In some implementations, based on the total number of particles of the graphite material, the number percentage of the primary particles in the graphite material is greater than or equal to 85%.

As used herein, the term "primary particles" refers to particles in a non-agglomerated state.

In the present disclosure, the number percentage of the primary particles in the graphite material may be measured by a method known in the art. As an example, a test sample is randomly selected from the negative electrode film layer, and a plurality of test regions are randomly selected from the test sample. Images of the plurality of test regions are obtained by using a scanning electron microscope. The proportion of the number of graphite material particles with primary particle morphology in the total number of the graphite material particles of each image is calculated, and the average value of a plurality of statistical results is the number percentage of the primary particles in the graphite material.

In some implementations, based on the total number of particles of the graphite material, the number percentage of primary particles in the graphite material is 85%, 86%, 87%, 88%, 89%, 90%, 91%, 92%, 93%, 94%, 95%, 96%, 97%, 98%, 99%, 100%, or within a numerical range between any two of the above items.

Compared with the secondary particles in an agglomerated state, the primary particles may effectively reduce the content of grain boundaries, reduce the probability of side reactions between the graphite material and the electrolyte solution, improve the uniformity of the electrode sheet, and further improve the cycle stability of the secondary battery.

In some implementations, the Dv1 of the graphite material ranges from 1.0 µm to 4.0 µm. In some implementations, the Dv1 of the graphite material ranges from 1.5 µm to 3.0 µm.

The volume distribution particle diameter Dv1 of the graphite negative electrode active material represents that a corresponding particle diameter when the cumulative volume distribution percentage of the material reaches 1%.

In the present disclosure, the volume distribution particle diameter Dv1 of the graphite material may be measured by a method known in the art. As an example, with reference to GB/T 19077-2016, a laser particle size analyzer is used for measuring. The testing instrument may be a Mastersizer Model 3000 laser particle size analyzer from Malvern Instruments Ltd., UK.

In some implementations, the Dv1 of the graphite material is 1.0 µm, 1.1 µm, 1.2 µm, 1.3 µm, 1.4 µm, 1.5 µm, 1.6 µm, 1.7 µm, 1.8 µm, 1.9 µm, 2.0 µm, 2.1 µm, 2.2 µm, 2.3 µm, 2.4 µm, 2.5 µm, 2.6 µm, 2.7 µm, 2.8 µm, 2.9 µm, 3.0 µm, 3.5 µm, 4.0 µm, or within a numerical range between any two of the above items.

Applicants found that the Dv1 particle size of the graphite material has a significant impact on the electrochemical performance of the secondary battery. The graphite material having the Dv1 within the appropriate range can not only enable the negative electrode film layer to have a specified proportion of fine powder, that is, small-particle graphite materials which is beneficial to improving the electrical contact of the negative electrode film layer, improving the dynamic performance, reducing the severity of black spots on the negative electrode when the battery is recycled, and reducing the probability of "rapid degradation" in the electrochemical performance of the battery, but also reduce the probability of the small-particle graphite materials blocking pores of the negative electrode film layer, thereby maintaining normal electrode sheet pores, so that the electrolyte solution has high wettability, the risk of lithium precipitation of the negative electrode is reduced, and the cycle stability of the battery is further improved.

In some implementations, the Dv50 of the graphite material ranges from 10 µm to 18 µm. In some implementations, the Dv50 of the graphite material ranges from 12 µm to 16 µm.

In some implementations, the Dv50 of the graphite material is 10 µm, 11 µm, 12 µm, 13 µm, 14 µm, 15m, 16m, 17m, 18m, or within a numerical range between any two of the above items.

The graphite material having the Dv50 within the above range is prone to form an effective connection in the negative electrode film layer, so as to improve the conductivity of active ions and electrons, and can form a reasonable pore structure in the negative electrode film layer, thereby comprehensively improving the cycle stability of the secondary battery.

In some implementations, the particle size distribution (Dv90-Dv10)/Dv50 of the graphite material ranges from 1.20 to 1.70. In some implementations, the particle size distribution (Dv90-Dv10)/Dv50 of the graphite material ranges from 1.35 to 1.60.

As used herein, the term "particle size distribution" refers to a measure of the particle diameter distribution width.

In some implementations, the particle size distribution (Dv90-Dv10)/Dv50 of the graphite material is 1.20, 1.25, 1.30, 1.35, 1.40, 1.45, 1.50, 1.55, 1.60, 1.65, 1.70, or within a value range between any two of the above items.

The particle size distribution of the graphite material is within the above range, which is not only beneficial to reducing a bridging phenomenon between the graphite materials and improving the electrical contact of the negative electrode film layer, but also beneficial to improving the dispersion uniformity of the graphite material in the slurry and comprehensively improving the cycle performance of the battery.

In some implementations, the specific surface area of the graphite material ranges from 0.6 m²/g to 1.5 m²/g. In some implementations, the specific surface area of the graphite material ranges from 0.8 m²/g to 1.4 m²/g.

In the present disclosure, the specific surface area of the graphite material may be measured by a method known in the art. As an example, with reference to GB/T 19587-2017, a nitrogen adsorption specific surface area test method is used for testing and a Brunauer Emmett Teller (BET) method is used for calculating. A test instrument may be a Tri-Star 3020 specific surface area pore size analysis tester from Micromeritics, USA.

In some implementations, the specific surface area of the graphite material is 0.6 m²/g, 0.7 m²/g, 0.8 m²/g, 0.9 m²/g, 1 m²/g, 1.1 m²/g, 1.2 m²/g, 1.3 m²/g, 1.4 m²/g, 1.5 m²/g, or within a numerical range between any two of the above items.

The graphite material having the specific surface area within the above range can reduce the consumption of active ions during the formation of a solid electrolyte interphase (SEI) film, reduce the probability of side reactions, and improve the cycle stability of the battery.

In some implementations, the oil absorption value of the graphite material is less than or equal to 45 ml/100 g. In some implementations, the oil absorption value of the graphite material ranges from 25 ml/100 g to 44 ml/100 g.

As used herein, the term "oil absorption value" refers to the volume of linseed oil that can be absorbed by 100g of graphite material. For example, the oil absorption value of the graphite material is 40 ml/100 g, which refers to that 100g of the graphite material can absorb 40 ml of linseed oil.

The oil absorption value of the graphite material may be measured by a method and a device known in the art. For example, the following steps are performed: a test oil and a graphite material sample are respectively obtained, and a torque threshold is set for an oil absorption value tester; the oil is added onto the sample in a mixing chamber of the oil absorption value tester at a constant speed, and the viscosity of a mixture of the sample and the oil increases continuously as the amount of oil absorbed by the sample increases; and when the viscosity of the mixture reaches the preset torque threshold of the oil absorption value tester, the tester stops and calculates the volume of the oil absorbed by the sample per unit mass. This value is the oil absorption value QI of the sample. The test oil is linseed oil (DBP), and the torque threshold is 1N.

In some implementations, the oil absorption value of the graphite material may be 35 ml/100 g, 36 ml/100 g, 37 ml/100 g, 38 ml/100 g, 39 ml/100 g, 40 ml/100 g, 41 ml/100 g, 42 ml/100 g, 43 ml/100 g, 44 ml/100 g, 45 ml/100 g, or within a numerical range between any two of the above items.

The oil absorption value of the graphite material can reflect the dispersibility of the graphite material in the negative electrode slurry to a certain extent. A high oil absorption value of the graphite material means that the graphite material needs to be impregnated with more dispersant, such as sodium carboxymethyl cellulose, during the dispersion process, and the slurry is easier to sediment, resulting in unstable quality of an electrode sheet coating process and uneven thickness of the electrode sheet after cold pressing. The graphite material having the oil absorption value within the appropriate range has excellent dispersibility in the negative electrode slurry, and the negative electrode slurry exhibits good antisedimentation and uniformity, which is prone to preparing an electrode sheet with uniform quality, reduces the probability of uneven local current density during charging and discharging, reduces a lithium precipitation phenomenon caused by the polarization of the electrode sheet, improves the cycle stability of the battery, and prolongs the service life of the battery.

In some implementations, the degree of graphitization of the graphite material ranges from 88% to 93%. In some implementations, the degree of graphitization of the graphite material ranges from 89% to 92%.

As used herein, the term "degree of graphitization" refers to an indicator that measures the degree to which carbon atoms form a hexagonal close-packed graphite crystal structure.

In the present disclosure, the degree of graphitization of the graphite material may be measured by a method known in the art. As an example, an X-ray diffractometer (such as a BrukerD8Discover) is used for testing with reference to JISK0131-1996 and JB/T4220-2011, the average interlayer distance d₀₀₂ of crystallographic planes in a graphite material crystal structure (002) is obtained, and then the degree of graphitization is calculated according to the formula g=(0.344-d₀₀₂)/(0.344-0.3354)×100%. In the above formula, d₀₀₂ is the average interlayer spacing of the crystallographic planes in the graphite material crystal structure (002) expressed in nanometers (nm).

In some implementations, the degree of graphitization of the graphite material is 88%, 89%, 90%, 91%, 92%, 93%, or within a numerical range between any two of the above items.

The graphite material having the degree of graphitization within the above range has a larger interlayer spacing, which is beneficial to rapid deintercalation of active ions, reducing the expansion rate of the graphite material during the cycle process, and further improving the long cycle life of the battery.

In some implementations, the compaction density of the negative electrode film layer ranges from 1.40 g/cm³ to 1.55 g/cm³; and/or, the areal density of the negative electrode film layer ranges from 7 mg/cm² to 14 mg/cm².

In the present disclosure, the compaction density of the negative electrode film layer may be measured by a method known in the art. As an example, a negative electrode sheet test sample with the area of S is weighed by an electronic balance, the weight is denoted as W1, and the thickness T1 of the negative electrode sheet is measured by a micrometer. Then, the negative electrode film of the above weighed negative electrode sheet is wiped off. The weight of the negative electrode current collector is measured and denoted as W₂, and the thickness T2 of the negative electrode current collector is measured by the micrometer. Then, the compaction density of the negative electrode film layer PD=(W1-W2)/[(T1-T2)×S].

In some implementations, the compaction density of the negative electrode film layer is 1.40 g/cm³, 1.43 g/cm³, 1.46 g/cm³, 1.49 g/cm³, 1.52 g/cm³, 1.55 g/cm³, or within a numerical range between any two of the above items.

In the present disclosure, the areal density of the negative electrode film layer may be measured by a method known in the art. As an example, the negative electrode sheet after cold pressing is punched into a small disc with the area of S1, and the small disc is weighed and denoted as M1. Then, the negative electrode film of the weighed negative electrode sheet is wiped off. The weight of the negative electrode current collector is weighed and denoted as M0. The areal density of the negative electrode film =(the weight M1 of the negative electrode sheet-the weight M0 of the negative electrode current collector)/S1.

In some implementations, the areal density of the negative electrode film layer is 7 mg/cm², 8 mg/cm², 9 mg/cm², 10 mg/cm², 11 mg/cm², 12 mg/cm², 13 mg/cm², 14 mg/cm², and within a numerical range between any two of the above items.

In some implementations, the graphite material is synthetic graphite.

In some implementations, the conductive agent includes at least one of conductive carbon black, acetylene black, graphite, graphene, carbon nanotubes, and carbon nanofibers.

In some implementations, a preparation method of the graphite material includes the steps of: providing materials, where the materials includes at least one of petroleum coke, needle coke, and pitch coke, and based on the total volume of the structure of the materials, the volume percentage of mosaic-type and domain-type structures in the materials is not less than 60%; processing the materials to obtain precursor; and performing graphitization treatment on the precursor to obtain the graphite material.

As used herein, the term "petroleum coke" refers to coke formed by carbonization of petroleum residue or petroleum asphalt at high temperature, which is called petroleum coke.

As used herein, the term "needle coke" refers to coal tar pitch or petroleum asphalt. After an anisotropic mesophase is formed by liquid-phase carbonization, and then subjected to high-temperature carbonization and other processes to form coke with a needle-like texture, which is called needle coke.

As used herein, the term "pitch coke" refers to a solid material formed by carbonizing coal tar pitch at high temperature.

The above materials typically include at least one of a mosaic-type structure, a domain-type structure, and a fibrous structure. Generally, based on the morphological characteristics and the isochromatic domain sizes of the coke under a polarizing microscope, an isochromatic domain microstructure with the size of less than 30 µm is identified as a mosaic type structure, an isochromatic domain microstructure with the size of more than 30 µm is identified as a domain type structure, and a stripshaped anisotropic isochromatic domain is identified as a fibrous type structure.

In the present disclosure, the proportions of the mosaic-type structures and the domain-type structures in the raw materials may be measured by a method known in the art. As an example, raw materials are taken in accordance with GB 1997-89, the raw materials are crushed to 1 mm and mixed uniformly, and then split to the mass of 40g to 50g, and a square hole sieve is used to obtain 4 g to 5 g samples with the diameter of 0.07 mm to 1.0 mm for tableting. Polished sections of powdered coke and lump coke are prepared according to MT 116.1-86, and the diameter of the polished section of the powdered coke is not less than 22 mm, where the volume fraction of mounting resin should be less than 1/3. The sample is placed on a slide with clay, and is placed on a stage for focusing after being flattened. After the microscope is calibrated, a polarizer and a analyzer are adjusted to be orthogonal. An azurite test plate (1λ) is inserted, so that a visual field exhibits a primary red interference color. The step length of a translation stage is determined to ensure that more than 400 effective measurement points are uniformly distributed, where the point spacing typically ranges from 0.3 mm to 0.5 mm, and the line distance generally ranges from 0.5 mm to 0.8 mm. From one end of the sample, the microstructure category under the intersection point of crosshairs is determined, and the volume content of the mosaic-type structures and the domain-type structures in the raw materials are calculated by dividing the number of effective measurement points of optical structures of the mosaic-type structures and the domain-type structures by the total number of measurement points as counted.

In some implementations, based on the total volume of the structure of the raw materials, the volume percentage of the mosaic-type structures and the domain-type structures in the raw materials is 60%, 65%, 70%, 75%, 80%, 85%, 90%, 95%, 100%, or within a numerical range between any two of the above items.

As used herein, the term "graphitization treatment" refers to a heat treatment process of the graphite material, which is the process that the graphite material transforms from a two-dimensional structure of a carbon network to a three-dimensional ordered structure through "crystallite growth" under the action of high temperature.

In some implementations, power for graphitization treatment is 70% to 90% of the rated power of the device.

In some implementations, the power for graphitization treatment may be 70%, 75%, 80%, 85%, 90% or within a numerical range between any two of the above items. It can be understood that a graphitization treatment device refers to any device capable of performing graphitization treatment, including but not limited to an Acheson furnace, a box furnace, an internal series furnace, a continuous graphitization, an electric calcining furnace, a medium-frequency furnace, a tubular furnace or other device. The graphitization treatment apparatuses produced by different manufacturers may have different rated power, and may be selected based on actual conditions.

In some implementations, the graphitization treatment apparatus is the internal series furnace, and the rated power of the internal series ranges from 25000 W to 32000 W.

In some implementations, the graphitization treatment apparatus is the Acheson furnace, and the rated power of the Acheson furnace ranges from 28000 W to 30000 W.

In some implementations, the maximum power for graphitization treatment ranges from 23000 W to 25000 W. For example, the maximum power may be 23000W, 23500W, 24000W, 24500W, 25000W, or within a numerical range between any two of the above items.

In some implementations, the constant power time for graphitization treatment at the maximum power ranges from 10h to 50h.

In some implementations, the constant power time for graphitization treatment at the maximum power is 10h, 13h, 16h, 19h, 22h, 25h, 28h, 31h, 33h, 36h, 39h, 42h, 45h, 48h, 50h, or within a numerical range between any two of the above items.

In some implementations, the graphitization treatment apparatus is the internal series furnace, and the constant power time for graphitization treatment at the maximum power ranges from 10h to 30h.

In some implementations, the graphitization treatment apparatus is the Acheson furnace, and the constant power time of graphitization treatment at the maximum power ranges from 30h to 50h.

In some implementations, the temperature for graphitization treatment ranges from 2800°C to 3000°C.

In some implementations, the temperature for graphitization treatment is 2800°C, 2900°C, 3000°C, or within a numerical range between any two of the above items.

Controlling the area percentage of the mosaic-type structure and the domain-type structure in the raw materials to be within an appropriate range can, on the one hand, obtain the graphite material with a low degree of graphitization and low powder compaction density, which is beneficial to improving the cycle performance of the battery, and on the other hand, obtain the graphite material with high gram capacity and high tap density, which improves the energy density of the battery.

In some implementations, processing the raw materials to obtain the precursor specifically includes the following steps of: crushing, shaping and classifying the raw materials to obtain secondary raw materials; and removing a part of fine powder, which accounts for 18% to 45% of the total mass of the secondary raw materials, in the secondary raw materials to obtain the precursor, where the Dv50 of the fine powder ranges from 3 µm to 7 µm, and the Dv99 of the same is less than or equal to 30 µm.

Crushing is the process of reducing the particle size of the raw materials, and the raw materials may be crushed by any mechanical apparatus such as a crusher or a mechanical mill. In some implementations, the raw materials are crushed to a set particle diameter and then sieved.

Shaping treatment may reduce burrs on the surfaces of the crushed raw materials, which is beneficial to obtaining a graphite material with high sphericity.

Classification is the process of adjusting the particle size distribution of the raw materials, to obtain a first precursor that meets particle size requirements. The particle diameter and particle size distribution of the precursor may be adjusted by adjusting a classification frequency and an air intake volume. The classification treatment may reduce the content of large particles and small particles in the precursor.

In some implementations, a part of fine powder in the secondary raw materials is removed to regulate the Dv1 of the graphite material, so that the Dv1 of the graphite material may be within an appropriate range, and the graphite material is prone to form a good electrical contact in the negative electrode film layer.

In some implementations, the volume distribution particle diameter Dv50 of the precursor ranges from 12 µm to 18 µm.

In some implementations, the volume distribution particle diameter Dv50 of the precursor may be 12 µm, 13 µm, 14 µm, 15 µm, 16 µm, 17 µm, 18 µm, or within a numerical range between any two of the above items.

In some implementations, the particle size distribution (Dv90-Dv10)/Dv50 of the precursor ranges from 1.3 to 2.0.

In some implementations, the particle size distribution (Dv90-Dv10)/Dv50 of the precursor may be 1.3, 1.4, 1.5, 1.6, 1.7, 1.8, 1.9, or 2.0.

Controlling the volume distribution particle diameter Dv50 or (Dv90-Dv10)/Dv50 of the precursor to be within the appropriate range facilitate the preparation of a graphite material having the volume distribution particle diameter Dv50 or (Dv90-Dv10)/Dv50 within an appropriate range, which may improve the cycle performance of the battery.

The type of the secondary battery is not particularly limited in the present disclosure. For example, the secondary battery may be a lithium-ion battery, or the like. Under normal conditions, the secondary battery includes a positive electrode sheet, a negative electrode sheet, an electrolyte, and the like. During charging and discharging of the secondary battery, active ions are intercalated and deintercalated back and forth between the positive electrode sheet and the negative electrode sheet. The electrolyte functions to conduct the active ions between the positive electrode sheet and the negative electrode sheet. The type of the electrolyte is not particularly limited in the present disclosure, and may be selected based on actual requirements. For example, the electrolyte may be selected from at least one of a solid electrolyte or a liquid electrolyte (namely, an electrolyte solution). Secondary batteries using electrolyte solutions, as well as some secondary batteries using solid electrolytes, may further include a separator. The separator is disposed between the positive electrode sheet and the negative electrode sheet to play a role of isolation.

### [Negative electrode sheet]

In some embodiments, the negative electrode sheet includes a negative electrode current collector and a negative electrode film layer disposed on at least one surface of the negative electrode current collector. For example, the negative electrode current collector has two surfaces opposite in its thickness direction, and the negative electrode film layer is disposed on either or both of the two opposite surfaces of the negative electrode current collector.

In some embodiments, the negative electrode film layer may further include other negative electrode active materials in addition to the above graphite material. In some embodiments, the other negative electrode active materials include, but are not limited to, one or a plurality of conventional natural graphite, synthetic graphite, soft carbon, hard carbon, a silicon-based material, a tin-based material, and lithium titanate. The silicon-based material may include one or a plurality of elemental silicon, silicon oxide, a silicon-carbon composite, a silicon-nitrogen composite, and a silicon alloy material. The tin-based material may include one or a plurality of elemental tin, a tin oxide, or a tin alloy material.

In some embodiments, the negative electrode film layer optionally further includes a negative electrode binder. The type of the negative electrode binder is not particularly limited in the present disclosure. As an example, the negative electrode binder may include one or a plurality of styrene-butadiene rubber (SBR), aqueous unsaturated resin SR-1B, aqueous acrylic resin (for example, polyacrylic acid (PAA), polymethacrylic acid (PMAA), and sodium polyacrylate (PAAS)), polyacrylamide (PAM), polyvinyl alcohol (PVA), sodium alginate (SA), and carboxymethyl chitosan (CMCS).

In some embodiments, the negative electrode film layer optionally further includes other auxiliary agents. As an example, other auxiliary agents may include a thickening agent, such as carboxymethylcellulose (CMC) sodium and a PTC thermistor material.

In some embodiments, the negative electrode current collector may be metal foil or a composite current collector. As an example of the metal foil, a copper foil may be used. The composite current collector may include a polymer material base layer and a metal material layer formed on at least one surface of the polymer material base layer. As an example, the metal material may include one or a plurality of copper, a copper alloy, nickel, a nickel alloy, titanium, a titanium alloy, silver, and a silver alloy. As an example, the polymer material base layer may include one or a plurality of polypropylene (PP), polyethylene terephthalate (PET), polybutylene terephthalate (PBT), polystyrene (PS), and polyethylene (PE).

The negative electrode film layer is generally formed by applying negative electrode slurry onto the negative electrode current collector, followed by drying and cold pressing. The negative electrode slurry is generally formed by dispersing a negative electrode active material, an optional conductive agent, an optional binder, and other optional auxiliary agents in a solvent, and stirring them uniformly. The solvent may be N-methylpyrrolidone (NMP) or de-ionized water, but is not limited thereto.

The negative electrode sheet does not exclude other additional functional layers in addition to the negative electrode film layer. For example, in some embodiments, the negative electrode sheet disclosed by the present disclosure further includes a conductive undercoating layer (for example, including a conductive agent and a binder) sandwiched between the negative electrode current collector and the negative electrode film layer and disposed on the surface of the negative electrode current collector. In some embodiments, the negative electrode sheet disclosed by the present disclosure may further include a protective layer covering the surface of the negative electrode film layer.

### [Positive electrode sheet]

In some embodiments, the positive electrode sheet includes a positive electrode current collector and a positive electrode film layer disposed on at least one surface of the positive electrode current collector. For example, the positive electrode current collector has two surfaces opposite in its own thickness direction, and the positive electrode film layer is disposed on either or both of the two opposite surfaces of the positive electrode current collector.

The positive electrode current collector may be metal foil or a composite current collector. As an example of the metal foil, aluminum foil may be used. The composite current collector may include a polymer material base layer and a metal material layer formed on at least one surface of the polymer material base layer. As an example, the metal material may include one or a plurality of aluminum, an aluminum alloy, nickel, a nickel alloy, titanium, a titanium alloy, silver, and a silver alloy. As an example, the polymer material base layer may include one or a plurality of polypropylene (PP), polyethylene terephthalate (PET), polybutylene terephthalate (PBT), polystyrene (PS), and polyethylene (PE).

The positive electrode film layer usually includes a positive electrode active material, an optional binder, and an optional conductive agent. The positive electrode film layer is generally formed by applying a positive electrode slurry on the positive electrode current collector, followed by drying and cold pressing. The positive electrode slurry is generally formed by dispersing a positive electrode active material, an optional conductive agent, an optional binder, and any other component in a solvent and stirring them uniformly. The solvent may be N-methylpyrrolidone (NMP), but is not limited thereto. As an example, the binder used in the positive electrode film layer may include one or a plurality of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resin. As an example, the conductive agent used in the positive electrode film layer may include one or a plurality of superconducting carbon, conductive graphite, acetylene black, carbon black, ketjen black, carbon dot, carbon nanotube, graphene, and carbon nanofiber.

The positive electrode active material may be a positive electrode active material for a secondary battery well-known in the art.

When the secondary battery of the present disclosure is a lithium-ion battery, the positive electrode active material may include, but is not limited to, one or a plurality of lithium transition metal oxide, lithium-containing phosphate, and their respective modified compounds. Examples of the lithium transition metal oxide may include, but are not limited to, one or a plurality of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate may include, but are not limited to, one or a plurality of lithium iron phosphate, a composite material of lithium iron phosphate and carbon, lithium manganese phosphate, a composite material of lithium manganese phosphate and carbon, lithium ferric manganese phosphate, a composite material of lithium ferric manganese phosphate and carbon, and respective modified compounds thereof.

In some embodiments, to further improve the energy density of the secondary battery, the positive electrode active material for a lithium-ion battery may include one or a plurality of lithium transition metal oxide having a general formula of LiₐNi_{b}Co_{c}M_{d}OₑA_{f} and a modified compound thereof. 0.8≤a≤1.2, 0.5≤b<1, 0<c<1, 0<d<1, 1≤e≤2, 0≤f≤1, where M is selected from one or a plurality of Mn, Al, Zr, Zn, Cu, Cr, Mg, Fe, V, Ti, or B, and A is selected from one or a plurality of N, F, S, or Cl.

In some embodiments, as an example, the positive electrode active material for a lithium ion battery may include one or a plurality of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiN_{0.85}Co_{0.15}Al_{0.05}O₂, LiFePO₄, and LiMnPO₄.

The modified compound of each of the aforementioned positive electrode active materials may be a compound of the positive electrode active material subjected to doping modification and/or surface coating modification.

### [Electrolyte]

In some embodiments, the electrolyte is an electrolyte solution, and the electrolyte solution includes an electrolyte salt and a solvent.

The type of the electrolyte salt is not specifically limited and may be selected based on actual requirements.

When the secondary battery of the present disclosure is a lithium-ion battery, as an example, the electrolyte salt may include one or a plurality of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP).

The type of the solvent is not specifically limited and may be selected based on actual requirements. In some embodiments, as an example, the solvent may include one or a plurality of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some embodiments, the electrolyte solution may optionally further include an additive. For example, the additive may include a negative electrode film-forming additive or a positive electrode film-forming additive, and may further include an additive capable of improving some performance of the secondary battery, such as an additive for improving the overcharge performance of the secondary battery, an additive for improving the high-temperature performance of the secondary battery, an additive for improving the low-temperature power performance of the secondary battery.

### [Separator]

The type of the separator is not particularly limited in the present disclosure, and any well-known porous separator with good chemical stability and mechanical stability may be used.

In some embodiments, the material of the separator may include one or a plurality of fiberglass, non-woven fabric, polyethylene, polypropylene, and polyvinylidene fluoride. The separator may be a single-layer film or a multilayer composite film. When the separator is the multilayer composite thin film, materials of all the layers are the same or different.

In some implementations, the positive electrode sheet, the separator, and the negative electrode sheet may be fabricated into an electrode assembly by a winding process or a lamination process.

In some embodiments, the secondary battery may include an outer package. The outer package may be used to package the foregoing electrode assembly and electrolyte.

In some embodiments, the outer package may be a hard shell, such as a hard plastic shell, an aluminum shell, or a steel shell. The outer package may also be a pouch, such as a bag-type pouch. The material of the pouch may be plastic, such as one or a plurality of polypropylene (PP), polybutylene terephthalate (PBT), and polybutylene succinate (PBS).

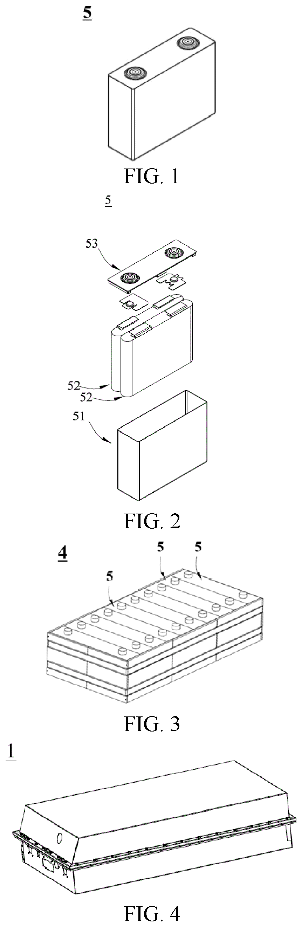

The shape of the secondary battery is not limited in the present disclosure, and may be a cylindrical shape, a square shape, or any other shape. FIG. 1 illustrates a square secondary battery 5 as an example.

In some embodiments, as shown in FIG. 2, the outer package may include a housing 51 and a cover plate 53. The housing 51 may include a bottom plate and side plates connected to the bottom plate, the bottom plate and the side plates forming an accommodating chamber in an enclosing manner. The housing 51 has an opening communicating with the accommodating chamber, and the cover plate 53 is configured to cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or several of the electrode assemblies 52 contained in the secondary battery 5, and adjustments may be made based on requirements.

A method for manufacturing the secondary battery of the present disclosure is well known. In some embodiments, the positive electrode sheet, the separator, the negative electrode sheet, and the electrolyte solution may be assembled to form the secondary battery. As an example, the positive electrode sheet, the separator, and the negative electrode sheet may be formed into an electrode assembly through a winding process or a lamination process. The electrode assembly may be placed into the outer package, dried, then be injected with an electrolyte solution, and be subject to procedures such as vacuum sealing, resting, formation, and shaping to obtain a secondary battery.

In some embodiments of the present disclosure, the secondary battery according to the present disclosure may be assembled into a battery module. The battery module may contain a plurality of secondary batteries. The specific number may be adjusted based on the application and capacity of the battery module.

FIG. 3 is a schematic diagram of a battery module 4 as an example. As shown in FIG. 3, in the battery module 4, a plurality of secondary batteries 5 may be arranged sequentially along the length direction of the battery module 4. Certainly, the battery cells may alternatively be arranged in any other manner. Further, the plurality of secondary batteries 5 may be fixed by fasteners.

Optionally, the battery module 4 may further include a housing with an accommodating space. The plurality of secondary batteries 5 are accommodated in the accommodating space.

In some embodiments, the battery modules described above may be assembled into a battery pack, and the number of battery modules included in the battery pack may be adjusted according to the application and capacity of the battery pack.

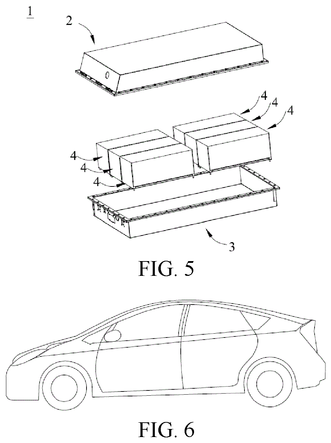

FIG. 4 and FIG. 5 are schematic diagrams of a battery pack 1 as an example. As shown in FIG. 4 and FIG. 5, the battery pack 1 may include a battery case and a plurality of battery modules 4 disposed in the battery case. The battery case includes an upper box body 2 and a lower box body 3. The upper box body 2 is configured to cover the lower box body 3 to form a closed space for accommodating the battery modules 4. The plurality of battery modules 4 may be arranged in any manner in the battery case.

### Electric device

The present disclosure further provides an electric device. The electric device includes at least one of a secondary battery, a battery module, or a battery pack of the present disclosure. The secondary battery, the battery module, or the battery pack may be used as a power supply of the electric device and may also be used as an energy storage unit of the electric device. The electric device may include, but is not limited to, mobile equipment (such as a cell phone, a tablet computer, or a notebook computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite, or an energy storage system.

For the electric device, the secondary battery, the battery module, or the battery pack may be selected based on the use requirements.

FIG. 6 is a schematic diagram of an electric device as an example. The electrical device is a pure electric vehicle, a hybrid electric vehicle, a plug-in hybrid electric vehicle, or the like. To satisfy the demands for high power and high energy density of the electric device, a battery pack or a battery module may be used.

As another example, the electric device may be a cell phone, a tablet computer, a notebook computer, or the like. This electric device is generally required to be thin and lightweight, and may use a secondary battery as a power supply.

### Examples

The following examples describe the disclosure of the present disclosure more specifically. These examples are used only for illustration, since various modifications and changes made within the scope of the disclosure of the present disclosure are obvious to those skilled in the art. Unless otherwise stated, all parts, percentages, and ratios reported in the following examples are based on mass. All reagents used in the examples are commercially available or can be synthesized according to conventional methods, and can be used directly without further treatment. All instruments used in the examples are commercially available.

### Material 1

Petroleum coke with mosaic-type and domain-type structures accounting for 63.1% was crushed. The crushed material was shaped to obtain secondary raw materials. Fine powder with the mass percentage of 18% in the secondary raw materials was removed, and the remaining materials were called precursor. The Dv50 particle diameter of the obtained precursor was 15.5 µm and the particle size distribution (Dv90-Dv10)/Dv50 of the same was 1.97. The fine powder referred to a component with the Dv50 ranging from 3 µm to 7 µm and with the Dv99 less than or equal to 30 µm.

The precursor was subjected to graphitization treatment in the Acheson furnace (the rated power of the Acheson furnace was 30000 W) at the temperature of 2800°C, and the maximum power for graphitization treatment was 24000 W. After the maximum power was maintained for 40h, the surface temperature of a crucible of the Acheson furnace was cooled to 400°C, the graphite crucible was taken out, and the material in the graphite crucible was sieved to remove magnetism, thereby obtaining a graphite material.

The tap density of the graphite material was 1.22 g/cm³, the Dv1 was 1.8 µm, the Dv50 was 14.6 µm, the particle size distribution (Dv90-Dv10)/Dv50 was 1.42, the specific surface area was 1.14 m²/g, and the degree of graphitization was 91.1%.

### Materials 2 to 5

Preparation methods of materials 2 to 5 are similar to that of material 1, except that the mass percentage of fine powder removed from the secondary raw materials is adjusted, and detailed parameters are shown in Table 1.

**Table 1**

| No. | Mass percentage of removed fine powder | Particle size distribution of precursor | Tap density (g/cm³) of graphite material | Dv1/µm of graphite material |
|---|---|---|---|---|
| Material 1 | 18% | 1.97 | 1.22 | 1.8 |
| Material 2 | 24% | 1.84 | 1.26 | 2.2 |
| Material 3 | 28% | 1.73 | 1.32 | 2.6 |
| Material 4 | 38% | 1.57 | 1.42 | 4.3 |
| Material 5 | 15% | 2.01 | 1.17 | 1.6 |

### Example 1

### Preparation of secondary battery

The material 1 prepared above, a conductive agent carbon black (Super P), a binder styrene-butadiene rubber, and a thickener sodium carboxymethyl cellulose were fully stirred and mixed in an appropriate amount of a solvent, that is deionized water, in the weight ratio of 95.4:1.8:1.0:1.8 to form a negative electrode slurry. The negative electrode slurry was uniformly coated on two surfaces of a negative electrode current collector copper foil, dried, and cold pressed to obtain the negative electrode sheet. The compaction density of the negative electrode film layer was 1.48 g/cm³, and the areal density of the same was 9.4 mg/cm².

The positive electrode active material lithium iron phosphate (LFP), the conductive agent Super P, and the binder PVDF were mixed in the mass ratio of 97:1:2, a solvent N-methylpyrrolidone NMP was added, and the mixture was stirred under the action of a vacuum stirrer until the system was homogeneous to obtain a positive electrode slurry. The positive electrode slurry was uniformly coated on aluminum foil of the positive electrode current collector, and a positive electrode sheet is obtained after drying, cold pressing and cutting. The compaction density of the positive electrode film layer is 2.50 g/cm³, and the areal density of the same is 20 mg/cm².

In an argon atmosphere glove box with the water content of less than 10 ppm, diethyl carbonate (DEC), ethyl methyl carbonate (EMC), and ethylene carbonate (EC) were mixed in the weight ratio of 1:1:1 to obtain an organic solvent, and then LiPF₆ was dissolved in the organic solvent to prepare an electrolyte solution with the LiPF₆ concentration of 1.0mol/L, and then vinylene carbonate (VC) was added to the electrolyte solution, where the content of VC was 2% of the total mass of the electrolyte solution.

A polyethylene film was used as a separator.

The positive electrode sheet, the separator, and the negative electrode sheet described above were stacked in order such that the separator was located between the positive electrode sheet and the negative electrode sheet to provide a role of isolation, and then the three items were wound to obtain an electrode assembly. The electrode assembly was placed into an outer package, dried, then injected with an electrolyte solution, and subject to procedures such as vacuum sealing, resting, formation, and shaping to obtain a lithium-ion battery.

### [Examples 2-7 and Comparative Examples 1-2]

A preparation method of the secondary battery is similar to that of Example 1, except that different graphite materials are used or the content of the conductive agent is adjusted. See Table 2 for details.

### Performance tests:

### (1) State of charge (SOC) test at formation endpoint

At 25°C, the batteries prepared in Examples and Comparative Examples after liquid injection were charged at 0.33 C, gas generated during a formation process was collected, and a corresponding SOC was recorded when the total amount of the gas did not increase.

### (2) Black spot test

At 25°C, the batteries in above Examples and Comparative Examples were charged at the constant current of 0.33 C to the voltage of 3.65 V, and disassembled in a dry room to observe whether there were black spots on the surface of the negative electrode sheet. Black spots are classified as follows: level 1: the total area of black spots/the total area of a negative electrode sheet is less than or equal to 1%, and the area of black spots in a single electrode sheet/the area of the single electrode sheet is less than or equal to 8%; level 2: the total area of black spots/the total area of a negative electrode sheet is greater than 1% and less than or equal to 3%, or the area of black spots in a single electrode sheet/the area of the single electrode sheet is greater than 8% and less than or equal to 15%; and level 3: the total area of black spots/the total area of a negative electrode sheet is greater than 3%, or the area of black spots in a single electrode sheet/the area of the single electrode sheet is greater than 15%.

### (3) Test for cycle performance of secondary battery

At 25°C, the batteries in above Examples and Comparative Examples were charged at the constant current of 1 C to the voltage of 3.65 V, then charged at the constant voltage of 3.65 V to the current of less than or equal to 0.05 C, and then discharged at the constant current of 1 C to the voltage of 2.5 V. This was one charge-discharge cycle, and an initial-cycle discharge capacity C1 was recorded. The charge and discharge cycle was repeated until the battery capacity was degraded to 70% of the initial capacity C1, and the number of cycles was recorded.

### Test results

The batteries in Examples and Comparative examples were each prepared according to the above method, and the parameters were measured. The results are shown in Table below.

**Table 2**

| No. | Negative electrode sheet | | Secondary battery | | |
|---|---|---|---|---|---|
| | Graphite material used | Content of conductive agent | SOC at formation endpoint | Black spots on negative electrode sheet | Number of cycles/cycle |
| Example 1 | Material 1 | 1.8% | 18.9% | None | 2018 |
| Example 2 | Material 2 | 1.8% | 26.2% | None | 2305 |
| Example 3 | Material 3 | 1.8% | 30.4% | None | 2368 |
| Example 4 | Material 4 | 1.8% | 43.4% | Level 1 | 2154 |
| Example 5 | Material 2 | 1.6% | 34.3% | Level 1 | 2245 |
| Example 6 | Material 2 | 2.5% | 19.2% | None | 1988 |
| Example 7 | Material 2 | 3.0% | 18.2% | None | 1823 |
| Comparative Example 1 | Material 2 | 1.0% | 50.2% | Level 2 | 1689 |
| Comparative Example 2 | Material 5 | 1.8% | 18.9% | None | 1718 |

It can be seen from Examples 1 to 7 in Table 2 that, the secondary battery includes the negative electrode sheet. The negative electrode sheet includes the negative electrode current collector and the negative electrode film layer disposed on at least one surface of the negative electrode current collector. The negative electrode film layer includes the negative electrode active material and the conductive agent. The negative electrode active material includes the graphite material, and the tap density of the graphite material is greater than or equal to 1.2 g/cm³. The negative electrode film layer includes the conductive agent. Based on the total mass of the negative electrode film layer, when the mass percentage of the conductive agent is greater than or equal to 1.6%, the secondary battery can reduce the severity of the black spots formed on the negative electrode of the graphite material with high tap density, reduce the probability of "rapid degradation" of the battery performance, and improve the cycle stability of the battery.

It can be seen from Examples 1 to 4 that when the Dv1 of the graphite material ranges from 1.5 µm to 3.0 µm, the SOC at formation endpoint of the battery is further reduced. Formation is a process of first charging a battery and activating an electrochemical reaction inside the battery. As charging in the formation process proceeds, lithium ions are deintercalated from the positive electrode material, transported through the separator via the electrolyte solution to the negative electrode, and intercalated into the negative electrode material, thereby forming the potential difference between the positive and negative electrodes, converting electrical energy into chemical energy of the battery. When a formation voltage reaches a specified value, a redox reaction occurs on the solid-liquid interface between the negative electrode and the electrolyte solution, generating a solid electrolyte interface film (SEI film). The higher the SOC at formation endpoint, the higher the charge level during formation, the more lithium ions consumed to form the SEI film, the lower the initial efficiency of the battery, and the more severe the black spots formed on the negative electrode of the battery. Reducing the SOC at formation endpoint of the battery is beneficial to reducing the severity of the black spots on the negative electrode and improving the cycle stability of the battery.

It should be noted that the present disclosure is not limited to the aforementioned embodiments. The aforementioned embodiments are merely examples, and any embodiment having substantially the same configuration as the technical concept and exhibiting the same operation and effect within the scope of the claims of the present disclosure is included in the technical scope of the present disclosure. In addition, various modifications that can be conceived by those skilled in the art may be made to the embodiments without departing from the subject matter of the present disclosure, and other embodiments constructed by combining some of the constituent elements in the embodiments are also included in the scope of the present disclosure.

## Claims

1. A secondary battery, **characterized by** comprising a negative electrode sheet, wherein the negative electrode sheet comprises a negative electrode current collector and a negative electrode film layer disposed on at least one surface of the negative electrode current collector, the negative electrode film layer comprises a negative electrode active material and a conductive agent, the negative electrode active material comprises a graphite material, the tap density of the graphite material is greater than or equal to 1.2 g/cm³, and based on the total mass of the negative electrode film layer, the mass percentage of the conductive agent is greater than or equal to 1.6%.

2. The secondary battery according to claim 1, wherein based on the total mass of the negative electrode film layer, the mass percentage of the conductive agent ranges from 1.6% to 2.5%, optionally from 1.65% to 2.0%.

3. The secondary battery according to claim 1 or 2, wherein the tap density of the graphite material ranges from 1.20 g/cm³ to 1.42 g/cm³, optionally from 1.25 g/cm³ to 1.35 g/cm³.

4. The secondary battery according to any one of claims 1 to 3, wherein the graphite material comprises primary particles; and optionally, based on the total number of particles of the graphite material, the number percentage of the primary particles in the graphite material is greater than or equal to 85%.

5. The secondary battery according to any one of claims 1 to 4, wherein the Dv1 of the graphite material ranges from 1.0 µm to 4.0 µm, optionally from 1.5 µm to 3.0 µm.

6. The secondary battery according to any one of claims 1 to 5, wherein the volume distribution particle diameter Dv50 of the graphite material ranges from 10 µm to 18 µm, optionally from 12 µm to 16 µm.

7. The secondary battery according to any one of claims 1 to 6, wherein the particle size distribution (Dv90-Dv10)/Dv50 of the graphite material ranges from 1.20 to 1.70, optionally from 1.35 to 1.60.

8. The secondary battery according to any one of claims 1 to 7, wherein the specific surface area of the graphite material ranges from 0.6 m²/g to 1.5 m²/g, optionally from 0.8 m²/g to 1.4 m²/g.

9. The secondary battery according to any one of claims 1 to 8, wherein the oil absorption value of the graphite material is less than or equal to 45 ml/100 g, optionally from 25 ml/100 g to 44 ml/100 g.

10. The secondary battery according to any one of claims 1 to 9, wherein the degree of graphitization of the graphite material ranges from 88% to 93%, optionally from 89% to 92%.

11. The secondary battery according to any one of claims 1 to 10, wherein
the compaction density of the negative electrode film layer ranges from 1.40 g/cm³ to 1.55 g/cm³; and/or
the areal density of the negative electrode film layer ranges from 7 mg/cm² to 14 mg/cm².

12. The secondary battery according to any one of claims 1 to 11, wherein the graphite material is synthetic graphite.

13. The secondary battery according to any one of claims 1 to 12, wherein the conductive agent comprises at least one of conductive carbon black, acetylene black, graphite, graphene, carbon nanotubes, and carbon nanofibers.

14. An electric device, comprising the secondary battery according to any one of claims 1 to 13.
